# EUROPÄISCHE PATENTANMELDUNG

(11) **EP 4 056 896 A1**
(43) Veröffentlichungstag der Anmeldung: **14.09.2022**
(21) Anmeldenummer: 22156332.3
(22) Anmeldetag: 11.02.2022
(51) Int. Cl.: F23D 11/24, F23D 11/36, F23N 3/00, F23N 5/02, F23L 15/00, F23D 11/44, F01N 3/025, F01N 3/029, F01N 3/20, F01N 3/36

(54) **BRENNERSYSTEM ZUM VORHEIZEN EINES ABGASREINIGUNGSSYSTEMS EINES FAHRZEUGS**

(30) Priorität: 23.02.2021 DE 102021104273
(71) Anmelder: Friedrich Boysen GmbH & Co. KG, 72213 Altensteig (DE)
(72) Erfinder: Gamst, Marvin, 72459 Albstadt (DE); Rathfelder, Tobias, 75387 Altbulach (DE); Oppenländer, Christian, 75365 Calw (DE)
(74) Vertreter: Manitz Finsterwald Patent- und Rechtsanwaltspartnerschaft mbB

(57) **Zusammenfassung**

Die vorliegende Erfindung betrifft ein Brennersystem für ein Fahrzeug, umfassend eine Prozesskammer zur Vermischung und/oder Verbrennung eines Brennstoffs, insbesondere eines flüssigen Brennstoffs, mit einem Prozessgas, insbesondere Luft, ein mit der Prozesskammer direkt oder indirekt in Verbindung stehendes Brennstoffzufuhrsystem zur Versorgung der Prozesskammer mit dem Brennstoff und ein mit der Prozesskammer in Verbindung stehendes Prozessgaszufuhrsystem zur Versorgung der Prozesskammer mit dem Prozessgas, wobei das Prozessgaszufuhrsystem eine Konditionierungseinrichtung zur Beeinflussung zumindest einer Temperatur des Prozessgases aufweist.

## Beschreibung

Die Erfindung betrifft ein Brennersystem für ein Fahrzeug mit einer Brennkraftmaschine.

Die Emissionen solcher Fahrzeuge unterliegen strengen gesetzlichen Regelungen. Die Abgase der Motoren werden zur Einhaltung dieser Regelungen einer aufwändigen Nachbehandlung unterzogen.

Aufgrund der sich ständig verschärfenden gesetzlichen Regelungen besteht jedoch Bedarf für weitere Effizienzsteigerung bei der Abgasreinigung.

Problematisch ist oftmals noch das Reinigungsverhalten der entsprechenden Einrichtungen, wenn diese vergleichsweise kalt sind, z.B. kurz nach dem Start der Brennkraftmaschine nach einer längeren Pause. Liegt nämlich die Temperatur einer katalytisch reinigenden Komponente unter ihrer jeweiligen Betriebstemperatur (beispielsweise 250 bis 280°C), so ist ihre Reinigungswirkung unbefriedigend. Erst wenn die Komponente durch das heiße Abgas der Brennkraftmaschine hinreichend aufgewärmt ist, entfaltet die entsprechende Abgasreinigungseinrichtung hinreichend gute Reinigungsergebnisse.

Es wird daher versucht, katalytisch reinigende Komponenten durch geeignete Einrichtung vorzuwärmen, damit sie schneller ihre Betriebstemperatur erreichen und damit der Wirkungsgrad der Abgasreinigungseinrichtung gesteigert wird. Dabei können Brennersysteme zum Einsatz gelangen.

Brennersysteme für einen mobilen Einsatz in Fahrzeugen müssen hohe Anforderungen erfüllen. Sie müssen einerseits kompakt sein, andererseits müssen sie auch bei den unterschiedlichsten Umweltbedingungen stets zuverlässig funktionieren und die gewünschte Leistung erbringen. Es ist außerdem von zunehmender Bedeutung, dass auch die Schadstoffemissionen derartiger Brennersysteme minimiert sind.

Beispielsweise tritt bei einem Kaltstart eines Brennersystems - insbesondere bei einem System, das mit einem flüssigen Brennstoff betrieben wird - die Problematik auf, dass es während der Eindosierung des Brennstoffes zu einer Benetzung der Wände einer Brennkammer des Systems kommen kann. Die Folge kann eine unvollständige Verbrennung des Brennstoffs sein. Dadurch besteht die Gefahr, dass es zu einem erhöhten Ausstoß von Schadstoffen kommt, unter anderem von un- oder nur teilweise verbrannten Kohlenwasserstoffen und Partikeln, wie etwa Feinstaubpartikeln. Außerdem wird das Zündverhalten des verwendeten Brennstoffs aufgrund der Wandbenetzung beeinträchtigt.

Die vorstehend genannten Probleme treten zumeist zu Beginn der Nutzung des Brennersystems auf. Unter bestimmten Bedingungen kann es jedoch auch während des Betriebs zu einer Wandbenetzung und zu einer Verschmutzung sensibler Komponenten des Systems kommen, beispielsweise einer Zündkerze, die die Reaktion des Brennstoffs mit dem Prozessgas einleitet. Von besonderer Bedeutung ist hierbei die Position der Hauptreaktionszone der Flamme im Inneren der Prozesskammer.

Es ist daher eine Aufgabe der vorliegenden Erfindung, ein verbessertes Brennersystem zu schaffen, das unter möglichst allen Bedingungen eine möglichst emissionsarme Verbrennung des Brennstoffs mit dem Prozessgas ermöglicht.

Die Aufgabe wird durch ein Brennersystem mit den Merkmalen des Anspruchs 1 gelöst.

Erfindungsgemäß weist das Brennersystem eine Prozesskammer zur Vermischung und/oder Verbrennung eines Brennstoffs, insbesondere eines flüssigen Brennstoffs, mit einem Prozessgas, insbesondere Luft, auf. Ferner ist ein mit der Prozesskammer direkt oder indirekt in Verbindung stehendes Brennstoffzufuhrsystem zur Versorgung der Prozesskammer mit dem Brennstoff vorgesehen. Zur Versorgung der Prozesskammer mit dem Prozessgas weist das System ein mit der Prozesskammer in Verbindung stehendes Prozessgaszufuhrsystem auf. Dem Prozessgaszufuhrsystem ist wiederum eine Konditionierungseinrichtung zur Beeinflussung zumindest einer Temperatur des Prozessgases zugeordnet. In der Regel wird eine Erhöhung der Temperatur des Prozessgases angestrebt.

Die bedarfsgerechte Anpassung einer Temperatur des Prozessgases ermöglicht eine verbesserte Reaktion des Brennstoffs mit dem Prozessgas in der Prozesskammer. Insbesondere werden ein Niederschlag oder eine Kondensation des Brennstoffs an Wänden der Prozesskammer wirkungsvoll vermieden, was eine Verbesserung der Kaltstarteigenschaften des Systems bewirkt. Dieser Vorteil ist vor allem bei dem vorgesehenen mobilen Einsatz in Fahrzeugen von besonderer Bedeutung, da diese oftmals tiefen Temperaturen ausgesetzt sind. Die Temperaturanpassung des Prozessgases erfolgt insbesondere bevor es in die Prozesskammer eintritt.

Gemäß einer Ausführungsform umfasst das Brennersystem eine Steuereinrichtung, mit der die Konditionierungseinrichtung steuer- oder regelbar ist. Auf die Konditionierungseinrichtung kann somit aktiv Einfluss genommen werden, um die Temperatur des Prozessgases bei Bedarf und situativ angemessen anzupassen.

Insbesondere umfasst das Brennersystem eine Sensoreinrichtung, mit der zumindest ein Messparameter in der Prozesskammer und/oder in einem mit der Prozesskammer verbundenen Auslassabschnitt und/oder in dem Brennstoffzufuhrsystem und/oder in dem Prozessgaszufuhrsystem bestimmbar ist. Die Sensoreinrichtung steht mit der Steuereinrichtung in Verbindung, die dazu eingerichtet und ausgebildet ist, die Konditionierungseinrichtung auf Basis des Messparameters zu regeln. Beispielsweise werden die Temperatur- oder andere physikalische Parameter des Brennstoff/Prozessgas-Gemischs gemessen. Es ist aber auch durchaus möglich, chemische Parameter zu bestimmen, um Informationen über den Zustand in der Prozesskammer zu erhalten. Gleiches gilt für den Auslassabschnitt, beispielsweise ein mit der Prozesskammer verbundenes Auslassrohr, und das Brennstoff- sowie Prozessgaszufuhrsystem. Die gemessenen Daten werden der Steuereinrichtung zugeführt, um die Temperatur des Prozessgases so anzupassen, dass die in der Prozesskammer herrschenden Bedingungen optimiert werden. Es versteht sich, dass eine Mehrzahl von (unterschiedlichen) Sensoreinrichtungen zum Einsatz gelangen kann, um eine möglichst präzise Regelung der Konditionierungseinrichtung zu ermöglichen.

Die Konditionierungseinrichtung ist beispielsweise eine Heizeinrichtung. Gemäß einer Ausführungsform ist die Heizeinrichtung eine elektrische Heizeinrichtung, bevorzugt eine Widerstandsheizeinrichtung (z.B. umfassend zumindest ein metallisches und/oder keramisches Widerstanzheizelement). Ihre elektrische Leistung liegt bevorzugt in einem Bereich von etwa 0,5 bis 5 kW. Für viele Anwendungen hat sich ein Leistungsbereich von 1 bis 4 kW, 1 bis 3 kW oder 1 bis 2 kW als vorteilhaft erwiesen. Die Heizeinrichtung kann derart ausgelegt sein, dass sie von dem 12V- und/oder 48V-Bordnetz eines Kraftfahrzeugs betreibbar ist.

Die Konditionierungseinrichtung kann eine einstückige oder mehrstückige Baueinheit sein, die zumindest teilweise oder vollständig aus Metall und/oder Keramik gefertigt ist.

Gemäß einer Ausführungsform des Brennersystems ist die Konditionierungseinrichtung funktionell unmittelbar vor der Prozesskammer angeordnet. D.h. zwischen der Konditionierungseinrichtung und der Prozesskammer liegen keine Komponenten, die eine nennenswerte funktionelle Bedeutung haben. Beispielsweise ist die Konditionierungskammer direkt an der Prozesskammer angeordnet, um eine möglichst geringe Änderungen der Temperatur des Prozessgases zwischen der Konditionierungseinrichtung und der Prozesskammer zu gewährleisten. In der Regel sind die beiden Komponenten jedoch durch eine oder mehrere Rohrleitungen verbunden, die bevorzugt thermisch isoliert sind.

In vielen Fällen ist - abweichend von der vorstehend beschriebenen "direkten" Anordnung - zwischen der Konditionierungseinrichtung und der Prozesskammer oder (teilweise) in der Prozesskammer eine Drallerzeugungseinrichtung vorgesehen. Diese ist derart angeordnet, dass das konditionierte Prozessgas durch sie leitbar ist, um dem Gasstrom zumindest eine Drallkomponente aufzuprägen. Dies ist insbesondere dann von Vorteil, wenn der Brennstoff mittels eines Injektors oder einer Düseneinrichtung in die Prozesskammer eingespeist wird. Das mit zumindest einer Drallkomponente beaufschlagte, konditionierte Prozessgas erlaubt eine deutlich bessere Vermischung das Brennstoffs mit dem Prozessgas, was wiederum zu einer verbesserten Verbrennung führt.

Anstelle einer direkten Verbindung des Brennstoffzufuhrsystems mit der Prozesskammer kann auch eine indirekte Verbindung vorgesehen sein. Das Brennstoffzufuhrsystem speist dann den Brennstoff nicht direkt in die Prozesskammer ein, sondern beispielsweise in das Prozessgaszufuhrsystem. Das Brennstoffzufuhrsystem ist dann indirekt mit der Prozesskammer verbunden. Bei einer solchen Ausgestaltung mündet das Brennstoffzufuhrsystems bevorzugt vor der Prozesskammer in das Prozessgaszufuhrsystem, insbesondere im Bereich der Konditionierungseinrichtung oder stromabwärts davon und/oder - falls vorgesehen - stromaufwärts der Drallerzeugungseinrichtung.

Eine weitere Maßnahme zur Verbesserung des Brennersystems kann darin bestehen, der Prozesskammer das Prozessgas in verdichteter Form zuzuführen. Zu diesem Zweck kann das Prozessgaszufuhrsystem eine Verdichtereinrichtung aufweisen, die bevorzugt in Strömungsrichtung des Prozessgases vor der Konditionierungseinrichtung angeordnet ist. Grundsätzlich ist es auch denkbar, dem Prozessgaszufuhrsystem eine Injektoreinrichtung zur selektiven Zugabe eines Zuschlagstoffes zuzuordnen.

Insbesondere ist das Prozessgaszufuhrsystem für eine Prozessgasmassestromförderung von 2 bis 75 kg/h, insbesondere 5 bis 50 kg/h, 10 bis 40 kg/h oder 20 bis 35 kg/h ausgelegt.

Das Brennersystem kann ein Modul bilden, das auf einfache Weise in eine Abgasanlage integrierbar ist. Beispielsweise steht das Brennersystem - in gasfluidtechnischer Hinsicht - lediglich über seinen Auslass stromaufwärts einer Abgasreinigungseinrichtung mit der Abgasanlage in Verbindung. Auch bestehende Anlagen können daher problemlos nachgerüstet werden.

Die Erfindung betrifft ferner ein Fahrzeug mit einem Brennersystem gemäß einer der vorstehend beschriebenen Ausführungsformen. Das Fahrzeug kann beispielsweise ein Landfahrzeug sein, beispielsweise ein Personenkraftfahrzeug oder ein Nutzfahrzeug. Das Fahrzeug weist eine Brennkraftmaschine auf, die mit einer Abgasanlage verbunden ist, das eine Abgasreinigungseinrichtung und ein Brennersystem gemäß zumindest einem der vorstehend beschriebenen Ausführungsformen umfasst, wobei das Brennersystem derart mit der Abgasanlage verbunden ist, dass durch das Brennersysteme erzeugte Verbrennungsprodukt der Abgasreinigungseinrichtung bei Bedarf zuführbar ist, um diese vorzuheizen.

Die Erfindung betrifft zudem ein Verfahren zum Betrieb eines Brennersystems gemäß zumindest einer der vorstehend beschriebenen Ausführungsformen. Das Prozessgas wird dabei zumindest zeitweise vor einem Eintritt in die Prozesskammer erhitzt, insbesondere auf eine Temperatur von 50 bis 500 °C, bevorzugt auf eine Temperatur von 100 bis 400 °C.

Es kann vorgesehen sein, dass das Prozessgas zur Vorheizung der Prozesskammer genutzt wird, bevor eine Verbrennung des Brennstoffs erfolgt. Alternativ oder zusätzlich kann auch während des eigentlichen Betriebs des Brennersystems, also wenn bereits eine Verbrennung in der Prozesskammer stattfindet, eine Prozessgastemperaturanpassung vorgesehen sein. Die Temperaturanpassung kann während des Betriebs variiert werden. Die Anpassung erfolgt insbesondere bedarfsgerecht. Beispielsweise ist es denkbar, zu Beginn des Betriebs eine stärkere Vorwärmung des Prozessgases vorzusehen, und die Vorwärmung zu reduzieren, wenn die Brennkammer bereits hinreichend erwärmt ist, so dass eine Wandbenetzung weitgehend ausgeschlossen ist.

Nachfolgend wird die vorliegende Erfindung rein beispielhaft anhand vorteilhafter Ausführungsformen unter Bezugnahme auf die beigefügten Zeichnungen erläutert. Es zeigen:
- Fig. 1: eine erste Ausführungsform der Erfindung und
- Fig. 2: eine zweite Ausführungsform der Erfindung.

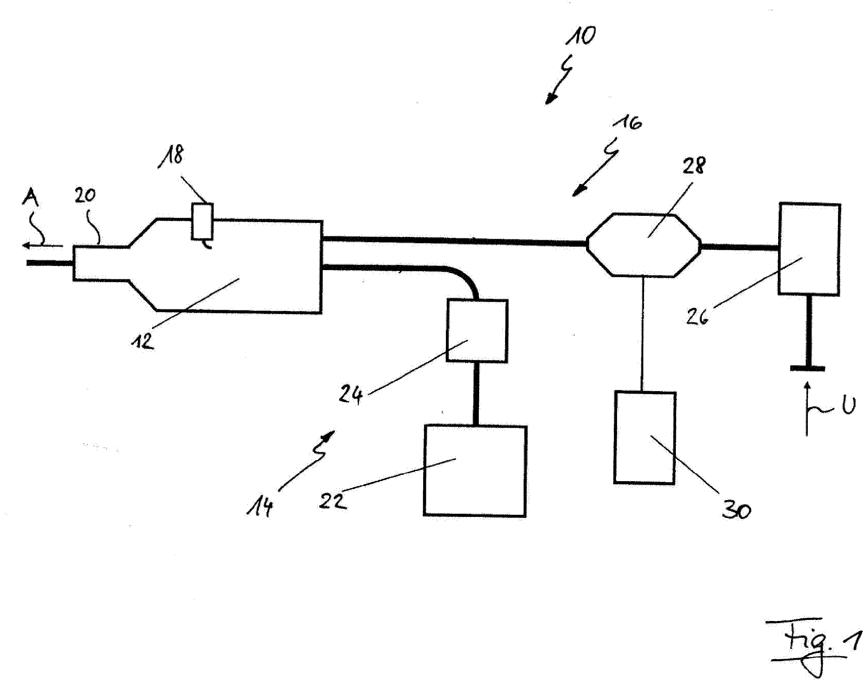

Fig. 1 zeigt ein erfindungsgemäßes Brennersystem 10. Es umfasst eine Brennkammer 12, ein Brennstoffzufuhrsystem 14 und ein Prozessgaszufuhrsystem 16.

Die Systeme 14, 16 führen der Kammer 12 die für eine Verbrennung erforderlichen Komponenten, in der Regel einen flüssigen Brennstoff und Luft, zu. Die Zufuhr erfolgt derart, dass der Brennstoff und das Prozessgas geeignet durchmischt sind. Hierfür können geeignete Injektions-, Düsen- und/oder Mischeinrichtungen vorgesehen sein, beispielsweise strömungsleitende Elemente. Die Vermischung des Brennstoffs mit dem Prozessgas kann auch in einer separaten, vorgeschalteten Kammer erfolgen.

Abweichend von der in Fig. 1 dargestellten Ausführungsform mit jeweils einer direkten Verbindung der Systeme 14, 16 mit der Brennkammer 12 kann das Brennstoffzufuhrsystem 14 vor der Brennkammer 12 in das Prozessgaszufuhrsystem 16 münden. Bevorzugt geschieht dies im Bereich der Konditionierungseinrichtung 28 oder kurz dahinter (in Stromrichtung des Prozessgases gesehen). Hinter der Einmündung des Brennstoffzufuhrsystems 14 in das Prozessgaszufuhrsystem 16 kann eine Drallerzeugungseinrichtung vorgesehen sein, um für eine verbesserte Durchmischung des Brennstoffs und des Prozessgases zu sorgen, bevor das Gemisch in die Brennkammer 12 eintritt.

Das durchmischte Brennstoff/Prozessgas-Gemisch wird mittels einer Zündkerze 18 (oder auch einer Glühkerze, eines Glühstifts o.ä.) gezündet, um den Verbrennungsprozess zu starten beziehungsweise am Leben zu erhalten.

Die Verbrennungsprodukte (Abgas A) entweichen aus der Brennkammer 12 durch einen Auslassabschnitt 20, der mit einem Abgassystem in Verbindung steht. Die von der Verbrennung erzeugte Wärme kann direkt von der Brennkammer 12 abgeführt werden. Es ist jedoch auch möglich, das verbrannte heiße Abgas an anderer Stelle einem Wärmetauscher zuzuführen, um dort die zum Beispiel für Heizungszwecke erforderliche Wärmemenge zu entnehmen. Insbesondere wird das durch den Auslassabschnitt 20 abgegebene Abgas A an eine Abgasreinigungseinrichtung (nicht gezeigt) abgegeben, um diese bei einem Kaltstart des Kraftfahrzeugs schnell auf Betriebstemperatur zu bringen. Zu diesem Zweck kann vorgesehen sein, das Abgas A stromaufwärts der Reinigungseinrichtung in das Abgassystem einzuspeisen.

Das Brennstoffzufuhrsystem 14 ist herkömmlicher Bauart und umfasst einen Brennstofftank 22, aus dem mittels einer Brennstoffpumpe 24 Brennstoff entnommen und der Brennkammer 12 zugeführt wird.

Das Prozessgaszufuhrsystem 16 entnimmt das Prozessgas einem entsprechenden Vorratsbehälter oder, wie im vorliegenden Beispiel, der Umgebung. Das Prozessgas ist demnach Umgebungsluft U, die zunächst gefiltert wird (optional, Filtereinrichtung nicht gezeigt). Ein (optionaler) Verdichter 26 verdichtet das Prozessgas und führt es einer Konditionierungseinrichtung 28 zu, die im vorliegenden Ausführungsbeispiel als Widerstandsheizung ausgebildet ist. Die Widerstandsheizung 28 ist durch eine steuer- beziehungsweise regelbare Stromversorgung 30 bedarfsgerecht betreibbar.

Durch die Widerstandsheizung 28 wird das verdichtete Prozessgas erwärmt, so dass sich in die Prozesskammer 12 eintretender Brennstoff nicht an den Wänden der Kammer 12 niederschlagen kann, was zu suboptimalen Ergebnissen der Verbrennung führen würde. Das erhitzte Prozessgas verbessert insbesondere das Kaltstartverhalten des Brennersystems 10 und verhindert auch während dem Betrieb des Systems 10 eine Benetzung der Wände der Kammer 12 mit Brennstoff. Die erfindungsgemäße Vorgehensweise sorgt durch die Optimierung der Verbrennung auch für eine weitgehende Verhinderung der Verschmutzung der Zündkerze 18.

Um Wärmeverluste zwischen der Widerstandsheizeinrichtung 28 und der Brennkammer 12 zu minimieren, sind diese räumlich so nahe wie aufgrund der baulichen Randbedingungen möglich beieinander angeordnet. Insbesondere finden sich zwischen den beiden Komponenten 28, 12 keine weiteren funktionellen Komponenten. Falls ein Rohrleitungssystem vorgesehen ist, ist dieses vorteilhafterweise thermisch isoliert.

Erfindungsgemäß wurde erkannt, dass im Bereich eines mobilen Einsatzes des Brennersystems 10 in Fahrzeugen eine elektrische Leistung der Heizeinrichtung 28 von etwa 1 bis 2 kW ausreichend ist, um das Prozessgas auf etwa 100 bis 400 °C zu erhitzen. Ein entsprechend vorgeheiztes Prozessgas verhindert zuverlässig die eingangs geschilderten Probleme. Es versteht sich, dass die jeweils geeignete Leistung beziehungsweise optimale Vorheiztemperatur von der Auslegung beziehungsweise den Anforderung des Brennersystems 10 abhängt.

Das vorstehend beschriebene Brennersystem ist für einen Prozessgasmassestrom von beispielsweise etwa 5 bis 50 kg/h ausgelegt, um die im mobilen Bereich geforderte Wärmemenge bereitstellen zu können.

Der Vollständigkeit halber wird darauf hingewiesen, dass die Vorheizung des Prozessgases auf beliebige Art erfolgen kann.

Die Zündkerze 18 (o.ä.), die Brennstoffpumpe 24, der Verdichter 26, die Stromversorgung 30 und etwaige weitere Komponenten des Brennersystems 10 können mit einer nicht gezeigten Steuereinrichtung verbunden sein, die das System 10 steuert. Durch eine oder mehrere Sensoreinrichtungen (nicht gezeigt), die mit der Steuereinrichtung verbunden sind (z.B. durch ein Bus-System) und die beispielsweise der Kammer 12, dem Abschnitt 20 und/oder Rohrleitungen der Systeme 14, 16 sowie deren Komponenten 22, 24 bzw. 26, 28, 30 zugeordnet sind, können die in dem System 10 herrschenden Bedingungen erfasst werden. Auch externe Parameter (z.B. Umgebungstemperatur, Luftfeuchtigkeit) oder die Daten anderen Sensoren des Fahrzeugs können der Steuereinrichtung zugeführt und von dieser zur Steuerung des Systems 10 berücksichtigt werden. Es können physikalische Parameter, wie beispielsweise Temperatur und/oder Druck, und/oder auch chemisehe Parameter gemessen werden. Durch die Berücksichtigung der vorstehend beschriebenen Daten kann der Betrieb der Konditionierungseinrichtung 28 angepasst werden, um das System 10 bedarfsgerecht zu betreiben.

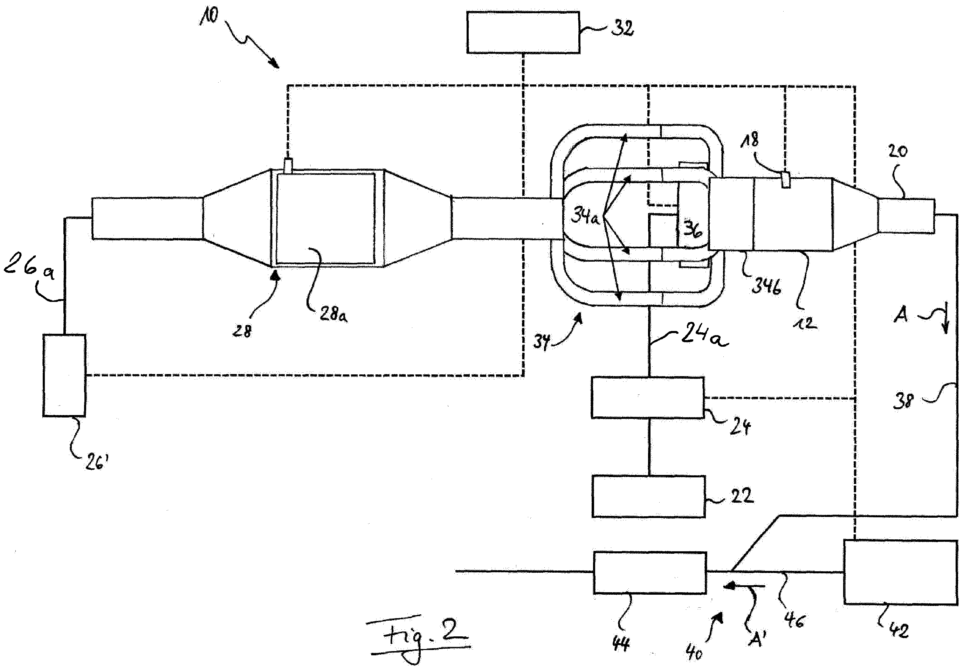

Fig. 2 zeigt ein weiteres Beispiel eines erfindungsgemäßen Brennersystems 10. Es umfasst eine Luftpumpe 26', die über eine Prozessluftleitung 26a die Konditionierungseinrichtung 28 mit verdichteter Prozessluft versorgt. Die Einrichtung 28 umfasst eine Heizscheibe 28a, die - wie auch die Pumpe 26' - von einer Steuereinrichtung 32 angesteuert wird, was durch eine gestrichelte Linie symbolisiert wird. Die Steuereinrichtung 32 kann derart ausgestaltet sein, dass sie die angesteuerten Einheiten auch mit der für ihren Betrieb erforderlichen Energie versorgt.

Die Heizscheibe 28a ist nicht zwingend eine Scheibe im engeren Sinn. Sie kann jede beliebige räumliche Struktur aufweisen, die es im Rahmen des zur Verfügung stehenden Bauraums auf effiziente Weise ermöglicht, die einströmende Prozessluft hinreichend stark zu erwärmen. Die Heizscheibe 28a ist bevorzugt ein metallisches oder keramisches Bauteil, das als Widerstandsheizelement fungiert. Auch eine Mischbauweise und/oder eine einstückige oder mehrstückige Bauweise der Heizscheibe 28a sind denkbar.

Die konditionierte Prozessluft wird nach dem Verlassen der Einrichtung 28 einem Drallerzeuger 34 zugeleitet, in dem der Prozessluftstrom auf Prozessluftstränge 34a aufgeteilt wird. Die Stränge 34a laufen in einer Drallkammer 34b zusammen. Dadurch wird dem Prozessluftstrom zumindest eine Drallkomponente aufgeprägt, was die Vermischung eines durch einen Injektor 36 in die Drallkammer 34b eingebrachten Brennstoffs mit der Prozessluft fördert. Auch andere Mischeinrichtungen, die für eine gute Vermischung des Brennstoffs mit der Prozessluft sorgen, können - alternativ oder zusätzlich - eingesetzt werden. Der Injektor 36 wird ebenfalls von der Steuereinrichtung 32 angesteuert. Dies gilt auch für die den Injektor 36 über eine Brennstoffleitung 24a mit Brennstoff versorgende Brennstoffpumpe 24, die mit dem Tank 22 verbunden ist.

Das gut durchmischte Brennstoff-Prozessluft-Gemisch gelangt anschließend in die Brennkammer 12, wo es durch die Zündkerze 18 (oder ein funktionell gleichwirkendes Mittel) gezündet wird (gesteuert durch die Steuereinrichtung 32). Das so erzeugte heiße Gas strömt durch den Auslassabschnitt 20 in eine Zuleitung 38, die das System 10 mit einer Abgasanlage 40 einer Brennkraftmaschine 42 verbindet. Die Zuleitung 38 mündet stromaufwärts einer Abgasreinigungseinrichtung 44 in eine Abgasleitung 46 der Anlage 40. Nach einem Kaltstart der Maschine 42 unterstützt das zusätzlich der Anlage 40 zugeführte heiße Gas des Systems 10 ein schnelleres Erreichen der Betriebstemperatur der Abgasreinigungseinrichtung 44.

Grundsätzlich ist auch denkbar, dass das Vorheizen der Abgasreinigungseinrichtung 44 schon vor dem eigentlichen Start der Maschine 42 einsetzt.

Abweichend von der dargestellten Ausführungsform kann die Zuleitung 38 auch direkt in die Abgasreinigungseinrichtung 44 münden.

Das System 10 ist bevorzugt ein Modul, das mit den üblicherweise in einem Kraftfahrzeug vorhandenen Komponenten verbunden wird. Es kann ein System sein, mit dem sich geeignete Kraftfahrzeuge nachrüsten lassen.

### Bezugszeichenliste

- 10: Brennersystem
- 12: Brennkammer
- 14: Brennstoffzufuhrsystem
- 16: Prozessgaszufuhrsystem
- 18: Zündkerze
- 20: Auslassabschnitt
- 22: Brennstofftank
- 24: Brennstoffpumpe
- 24a: Brennstoffleitung
- 26: Verdichter
- 26': Luftpumpe
- 26a: Prozessluftleitung
- 28: Konditionierungseinrichtung / Widerstandsheizung
- 28a: Heizscheibe
- 30: Stromversorgung
- 32: Steuereinrichtung
- 34: Drallerzeuger
- 34a: Prozessluftstrang
- 34b: Drallkammer
- 36: Injektor
- 38: Zuleitung
- 40: Abgasanlage
- 42: Brennkraftmaschine
- 44: Abgasreinigungseinrichtung

- A: Abgas des Systems 10
- A: Abgasstrom in Abgasanlage
- U: Umgebungsluft

## Patentansprüche

1. Brennersystem für ein Fahrzeug mit einer Brennkraftmaschine, insbesondere zum Vorheizen eines Abgasreinigungssystems, umfassend
- eine Prozesskammer (12) zur Vermischung und/oder Verbrennung eines Brennstoffs, insbesondere eines flüssigen Brennstoffs, mit einem Prozessgas, insbesondere Luft,
- ein mit der Prozesskammer direkt oder indirekt in Verbindung stehendes Brennstoffzufuhrsystem (14) zur Versorgung der Prozesskammer mit dem Brennstoff und
- ein mit der Prozesskammer in Verbindung stehendes Prozessgaszufuhrsystem (16) zur Versorgung der Prozesskammer mit dem Prozessgas,
wobei das Prozessgaszufuhrsystem eine Konditionierungseinrichtung (28) zur Beeinflussung zumindest einer Temperatur des Prozessgases aufweist.

2. Brennersystem nach Anspruch 1,
wobei das Brennersystem eine Steuereinrichtung (32) umfasst, mit der die Konditionierungseinrichtung steuerbar oder regelbar ist.

3. Brennersystem nach Anspruch 2,
wobei das Brennersystem zumindest eine Sensoreinrichtung umfasst, mit der zumindest ein Messparameter in der Prozesskammer und/oder in einem mit der Prozesskammer verbundenen Auslassabschnitt und/oder in dem Brennstoffzufuhrsystem und/oder in dem Prozessgaszufuhrsystem bestimmbar ist, wobei die Sensoreinrichtung mit der Steuereinrichtung in Verbindung steht und wobei die Steuereinrichtung dazu eingerichtet und ausgebildet ist, die Konditionierungseinrichtung auf Basis des Messparameters zu regeln.

4. Brennersystem nach Anspruch 1, 2 oder 3,
wobei die Konditionierungseinrichtung eine Heizeinrichtung ist, insbesondere eine elektrische Heizeinrichtung, bevorzugt eine Widerstandsheizeinrichtung.

5. Brennersystem nach Anspruch 4,
wobei die Konditionierungseinrichtung eine einstückige oder mehrstückige Baueinheit ist, die zumindest teilweise aus Metall oder Keramik gefertigt ist.

6. Brennersystem nach Anspruch 4 oder 5,
wobei die Heizeinrichtung eine elektrische Leistung von etwa 0,5 bis 5 kW, insbesondere von etwa 1 bis 4 kW, 1 bis 3 kW oder 1 bis 2 kW aufweist.

7. Brennersystem nach zumindest einem der vorstehenden Ansprüche, wobei die Konditionierungseinrichtung funktionell unmittelbar vor der Prozesskammer angeordnet ist.

8. Brennersystem nach zumindest einem der vorstehenden Ansprüche, wobei das konditionierte Prozessgas durch einen vor der Prozesskammer oder - ggf. teilweise - in der Prozesskammer angeordnete Drallerzeugungseinrichtung geleitet wird, um dem Gasstrom zumindest eine Drallkomponente aufzuprägen.

9. Brennsystem nach zumindest einem der vorstehenden Ansprüche, wobei das Brennstoffzufuhrsystem vor der Prozesskammer in das Prozessgaszufuhrsystem mündet, insbesondere im Bereich der Konditionierungseinrichtung oder stromabwärts davon und/oder - falls vorgesehen - stromaufwärts der Drallerzeugungseinrichtung.

10. Brennersystem nach zumindest einem der vorstehenden Ansprüche, wobei das Prozessgaszufuhrsystem eine Verdichtereinrichtung zur Verdichtung des Prozessgases und/oder eine Injektoreinrichtung zur selektiven Zugabe eines Zuschlagstoffes umfasst.

11. Brennersystem nach zumindest einem der vorstehenden Ansprüche, wobei das Prozessgaszufuhrsystem für eine Prozessgasmassestromförderung von 2 bis 75 kg/h, insbesondere 5 bis 50 kg/h ausgelegt ist.

12. Fahrzeug mit einer Brennkraftmaschine, die mit einer Abgasanlage verbunden ist, das eine Abgasreinigungseinrichtung und ein Brennersystem gemäß zumindest einem der vorstehenden Ansprüche umfasst, wobei das Brennersystem derart mit der Abgasanlage verbunden ist, dass durch das Brennersysteme erzeugte heißes Verbrennungsprodukt der Abgasreinigungseinrichtung bei Bedarf zuführbar ist, um diese vorzuheizen.

13. Verfahren zum Betrieb eines Brennersystems gemäß zumindest eines der Ansprüche 1 bis 11, wobei das Prozessgas zumindest zeitweise vor einem Eintritt in die Prozesskammer erhitzt wird, insbesondere auf eine Temperatur von 50 bis 500°C, bevorzugt 100 bis 400°C.
